Europäisches Patentamt

**European Patent Office**

**Office européen des brevets**

(11) Numéro de publication: **0 172 801**
**A1**

(12) # DEMANDE DE BREVET EUROPEEN

(21) Numéro de dépôt: **85870106.3**

(22) Date de dépôt: **07.08.85**

(51) Int. Cl.⁴: **F 16 K 3/02**
**F 16 K 39/04**

(30) Priorité: **07.08.84 FR 8412453**

(43) Date de publication de la demande:
**26.02.86 Bulletin 86/9**

(84) Etats contractants désignés:
**AT BE CH DE GB IT LI LU NL SE**

(71) Demandeur: **ROBINETTERIE JASPAR S.A.**
**26, rue Churchill**
**B-4624 Fléron(BE)**

(72) Inventeur:
**L'inventeur a renonce a sa designation**

(74) Mandataire: **Plucker, Guy et al,**
**OFFICE KIRKPATRICK 4 Square de Meeûs**
**B-1040 Bruxelles(BE)**

(54) **Vanne à sièges parallèles.**

(57) L'invention concerne l'industrie de la robinetterie. Elle a pour objet une vanne à sièges parallèles et libre dilatation comprenant un obturateur circulaire, constitué par deux opercules (5) sur chacun desquels est rapportée une garniture (10) qui constitue une surface d'étanchéité annulaire, deux rainures circulaires (12, 13) étant usinées concentriquement sur la surface annulaire d'au moins un des opercules et étant reliées entre elles par au moins un canal (14). Cette vanne a pour avantage d'éviter l'établissement, à l'intérieur du corps de vanne, d'une surpression s'opposant à la fermeture complète de celle-ci.

Fig. 2

La présente invention a pour objet une vanne à sièges parallèles et libre dilatation.

Les vannes de ce type présentent l'avantage de ne produire qu'une perte de charge infime. Elles sont principalement utilisées comme obturateurs, car ce sont de très mauvais organes de réglage. C'est à peu près le seul type d'obturateur utilisé dans les grandes dimensions. Ces vannes sont utilisées pour tous les fluides, liquides, gaz et vapeur.

Dans une vanne de ce type, un obturateur, commandé par une tige, se déplace parallèlement à ses surfaces de contact. Cet obturateur se compose de deux opercules, chacun étant appliqué contre son siège respectif par un ressort.

Dans le cas particulier où une vanne à sièges parallèles et libre dilatation est insérée dans un circuit de transfert de liquide, un phénomène, connu sous le nom de phénomène d'eau morte ou effet tige, apparaît lors de la fermeture de la vanne remplie de liquide : à partir du moment où les deux opercules ont complètement obturé les lumières de passage du liquide, alors qu'il reste encore à l'obturateur une certaine distance à parcourir avant que les opercules ne soient exactement en face de leurs sièges respectifs, un certain volume de liquide se trouve emprisonné à l'intérieur du corps de vanne. La tige de commande de l'obturateur, continuant à descendre, provoque un effet de pompe à piston qui augmente la pression à l'intérieur du corps de la vanne. A partir du moment où la pression augmente dans le corps de vanne, la tige ne pourra continuer à descendre que de quelques millimètres avant que sa progression ne soit bloquée par la surpression; en effet, les liquides étant relativement incompressibles, seule la compression des bulles d'air ou de gaz éventuellement emprisonnées dans le corps de vanne rend possible ce déplacement de quelques millimètres de la tige de commande de l'obturateur. Cet effet de pompe à piston est d'autant plus remarquable que l'étanchéité de la vanne est meilleure; une excellente étanchéité est obtenue en rectifiant les surfaces d'étanchéité des opercules et des sièges jusqu'au poli miroir. Dans un tel cas, dès que l'étanchéité est atteinte, il n'est plus possible de déplacer l'obturateur que sur quelques millimètres, après quoi il y a blocage de l'avancement de la tige de commande de l'obturateur. Le blocage de la tige a lieu d'une manière d'autant plus brutale que la vitesse de fermeture de la vanne est élevée, ce qui est particulièrement vrai dans le cas de vannes motorisées.

Il est évident que le blocage de l'avancement de la tige de commande de l'obturateur qui intervient lorsque l'étanchéité des opercules avec leurs sièges respectifs est atteinte, bien avant que les opercules ne soient exactement en face de leurs sièges respectifs, ne peut pas être considéré comme une indication fiable de la fermeture de la vanne, puisque l'obturateur n'est pas arrivé au bout de sa course.

En effet, le blocage de l'avancement de la tige de commande de l'obturateur entre les positions extrêmes de fin de course correspondant à l'ouverture ou à la fermeture complètes peut également avoir une autre cause, comme par exemple la présence d'un corps étranger sur le trajet de l'obturateur ou toute autre cause mécanique accidentelle.

La position de la tige de commande de l'obturateur permet par contre de déterminer de manière plus fiable l'état d'ouverture ou de fermeture de la vanne.

Dans le cas d'une vanne actionnée manuellement, l'opérateur peut aisément s'assurer de la position de la tige de commande de l'obturateur par simple vérification visuelle de repères ménagés sur celle-ci. Par ailleurs, les critères de sécurité étant moins rigoureux pour une vanne commandée manuellement, on se contente de constater le blocage de la tige de commande de l'obturateur pour admettre que la vanne est fermée, sans vérifier l'isolement du circuit.

Le problème de la détermination de l'état d'une vanne se pose avec beaucoup d'acuité pour une vanne commandée à distance, à partir d'un poste de commande central par exemple, et notamment pour une vanne insérée dans une installation de centrale nucléaire, où il est impératif de s'assurer de la fermeture de la vanne pour isoler de manière parfaite un circuit. Des moyens tels des capteurs de pression permettant de relever et de comparer les pressions de l'installation en amont et en aval de la vanne ou des interrupteurs de fin de course actionnés par la tige de commande de l'obturateur dans ses positions extrêmes sont utilisés pour déterminer l'état d'une telle vanne.

Lorsque les critères de sécurité à respecter sont rigoureux, comme c'est le cas dans les installations de centrales nucléaires, le cahier des charges prévoit également que l'obturateur doit atteindre la fin de sa course pour que la vanne soit considérée fermée.

Le problème se pose alors de supprimer ou de retarder l'effet de pompe à piston qui se manifeste dès l'obturation des lumières de passage du liquide, par l'augmentation de la pression à l'intérieur du corps de la vanne, alors que l'obturateur n'a pas atteint la fin de sa course.

Diverses solutions ont été proposées dans ce sens.

Une première solution consiste à réduire la surface d'étanchéité annulaire de chaque opercule à une couronne centrale, de manière à retarder la naissance de la surpression à l'intérieur du corps de la vanne, provoquée par la descente de la tige de commande de l'obturateur. L'obturation des lumières de passage du liquide ne se fait que lorsque chaque opercule est presque exactement en face de son siège. La réduction de la surface d'étanchéité annulaire entraîne une réduction de la surface d'appui de l'opercule sur son siège, ce qui a pour conséquence que l'opercule est soumis à des vibrations, les chocs résultants provoquant le matage du siège.

Une autre solution consiste à supprimer l'opercule situé en amont. L'étanchéité de la vanne est assurée alors uniquement par l'opercule situé en aval. Cette conception élimine le phénomène d'eau morte (volume d'eau emprisonné dans le corps de la vanne) et la tige de commande de l'obturateur peut descendre sans provoquer d'effet de pompe à piston. Toutefois le guidage de l'opercule unique pose des problèmes de réalisation pratique qui ne peuvent pas être résolus de manière économiquement rentable.

Il a également été proposé de supprimer l'effet de pompe à piston en neutralisant l'opercule situé en amont, par exemple en le perforant. De cette manière, le guidage de l'obturateur est assuré de façon fiable.

Toutefois, ces deux derniers types de vannes à opercule unique présentent l'inconvénient de ne pas être réversibles. Leur montage nécessite un soin particulier et leur utilisation est limitée aux installations dans lesquelles l'écoulement du liquide se fait toujours dans le même sens. En effet, dans les vannes à sièges parallèles, l'étanchéité est assurée par la pression exercée par le liquide sur l'opercule situé du côté aval de la vanne, qui est ainsi appliqué sur son siège. Il n'est donc pas question de retourner la vanne ou de renverser le sens de l'écoulement du liquide, car la pression exercée par celui-ci risquerait d'écarter l'opercule de son siège.

Suivant une autre solution proposée, la tige de commande de l'obturateur traverse de part en part le corps de la vanne. De cette façon, le volume de tige se trouvant à l'intérieur du corps de la vanne reste constant tout au long du déplacement de la tige. Cette solution présente toutefois l'inconvénient de nécessiter deux boîtes à bourrages, ce qui double les risques de fuites, qui ne sont pas à négliger lorsque les pressions de travail sont élevées.

On a également proposé des systèmes qui comprennent des opercules formés d'un corps d'opercule et d'un anneau d'étanchéité, ces deux pièces étant raccordées par un système à soufflet. Ces systèmes sont toutefois limités à certaines pressions. Par ailleurs, ces systèmes sont d'une construction compliquée et font appel à des soufflets, ce qui présente des risques de fatigue due à la sollicitation, inadmissibles dans des installations où le niveau de la sécurité requise est très élevé. Le principe de fonctionnement consiste à supprimer la surpression dans le corps de vanne en faisant communiquer celui-ci avec la conduite située en amont, grâce à l'action exercée sur les soufflets par cette surpression. Ces systèmes sont utilisés de préférence dans des installations à haute température, où il y a risque de dilatation du volume de liquide emprisonné dans le corps de vanne lors de la fermeture.

La présente invention apporte une solution simple, peu coûteuse et fiable au problème créé par la naissance de la surpression dans le corps de la vanne, en retardant l'établissement de l'étanchéité parfaite. En effet, celle-ci n'est atteinte qu'au moment où il ne reste plus à l'obturateur que quelques millimètres à parcourir avant d'atteindre sa position extrême correspondant à la fermeture de la vanne.

La présente invention a pour objet une vanne à sièges parallèles comprenant un obturateur circulaire constitué par deux opercules à surface d'étanchéité annulaires sur lesquels sont rapportées deux garnitures (10, 11) qui constituent les surfaces d'étanchéité annulaires. Sur la surface d'étanchéité d'au moins une des deux garnitures sont usinées deux rainures circulaires concentriques à cette surface d'étanchéité et reliées entre elles par au moins un canal.

Suivant une forme d'exécution préférée, les surfaces d'étanchéité annulaires de chacune des deux garnitures portent deux rainures circulaires usinées concentriquement à ces surfaces.

Le canal qui relie les deux rainures circulaires est avantageusement une rainure usinée radialement sur la surface d'étanchéité annulaire.

Suivant une forme d'exécution préférée, les deux rainures circulaires sont reliées par plusieurs canaux usinés radialement.

L'invention sera décrite plus en détail ci-après, avec référence aux dessins annexés, dans lesquels :

la Fig. 1 est une coupe partielle d'une vanne à sièges parallèles suivant l'invention, suivant un plan passant par l'axe de la tige de commande de l'obturateur;

la Fig. 2 est une vue de face d'un opercule équipant la vanne de la Fig. 1;

la Fig. 3 est une coupe suivant la ligne III-III de la Fig. 2;

la Fig. 4 est une vue, à grande échelle, du détail désigné par IV à la Fig. 2;

la Fig. 5 est une coupe suivant la ligne V-V de la Fig. 4; (on remarquera que cette Fig. 5 est également une vue, à grande échelle, du détail désigné par V à la Fig. 3);

la Fig. 6 est une vue, à grande échelle, du détail désigné par VI à la Fig. 3;

les Fig. 7, 9 et 11 montrent un opercule et le siège correspondant de la vanne dans différentes positions de fermeture successives, lors de la manoeuvre de fermeture, et

les Fig. 8, 10 et 12 sont des coupes suivant les lignes VIII-VIII, X-X et XII-XII des Fig. 7, 9 et 11.

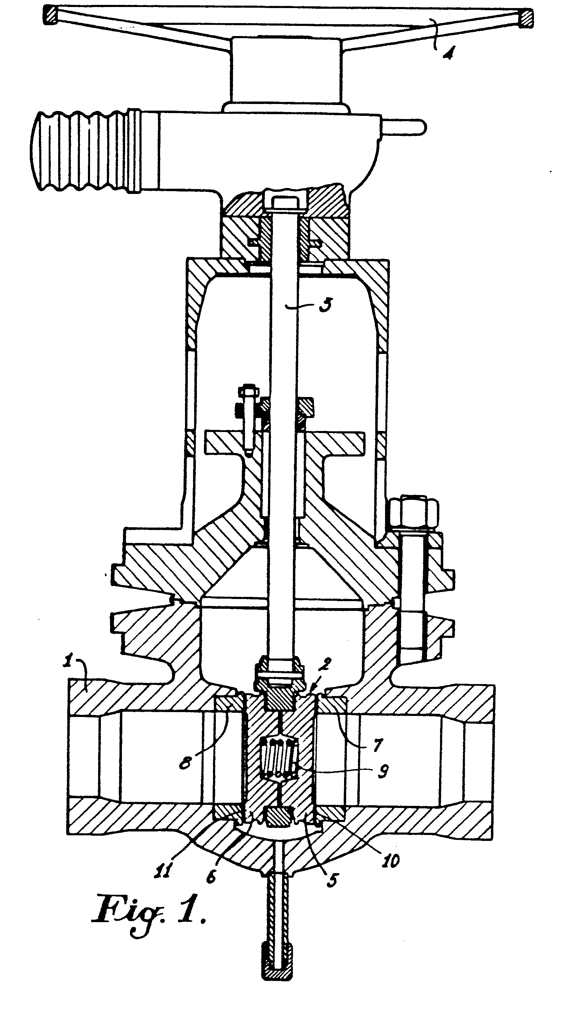

La vanne représentée à la Fig. 1 est constituée d'un corps 1 en acier et d'un obturateur 2 commandé par une tige 3. Cette tige 3 est entraînée soit par un volant 4, soit par un servomoteur. L'obturateur 2 est constitué par deux opercules 5 et 6 qui sont appliqués sur leurs sièges respectifs 7 et 8 par un ressort en acier inoxydable 9. Sur les opercules 5 et 6 sont rapportées et soudées des garnitures 10 et 11 en un alliage dur, qui constituent les surfaces d'étanchéité des opercules et qui viennent en contact avec les sièges parallèles 7 et 8 également en un alliage dur (voir Fig. 1, 2 et 3).

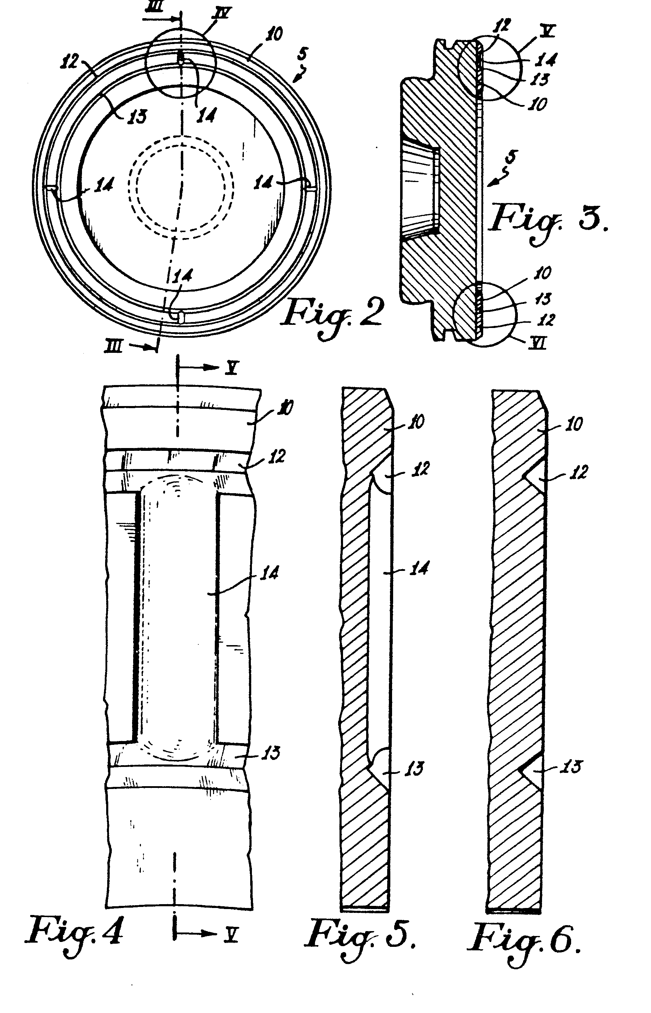

Les garnitures 10, 11 forment des surfaces d'étanchéité annulaires, sur lesquelles sont usinées concentriquement deux rainures circulaires 12 et 13. Des canaux 14 relient ces deux rainures circulaires 12 et 13. Ces canaux 14 sont des rainures usinées radialement sur les surfaces d'étanchéité des garnitures 10 et 11. Les Fig. 4 et 5 montrent en détail l'agencement d'un canal 14.

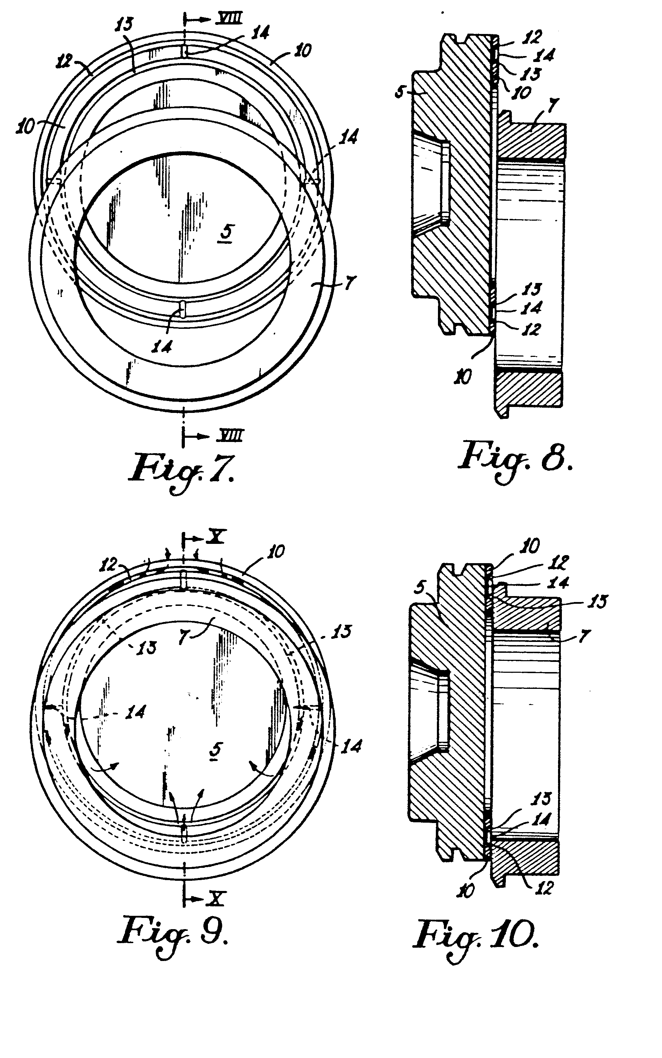

Les rainures circulaires 12 et 13 telles qu'illustrées ont une section en V (voir Fig. 6), mais il est évident qu'un profil et une profondeur quelconques peuvent être choisis, en fonction notamment des facilités d'usinage. Il en est de même pour le canal 14, dont la profondeur peut être inférieure (voir Fig. 5), égale ou supérieure à celle des rainures 12 et 13.

Les Fig. 7 à 12 montrent le fonctionnement de la vanne suivant l'invention, et, en particulier, les positions relatives d'un opercule 5 et de son siège 7, lorsque :

a)    l'opercule 5 obture partiellement la lumière de passage du liquide (Fig. 7 et 8);

b)    l'opercule 5 obture complètement la lumière de passage du siège 7, mais n'est pas encore arrivé à la fin de sa course (Fig. 9 et 10);

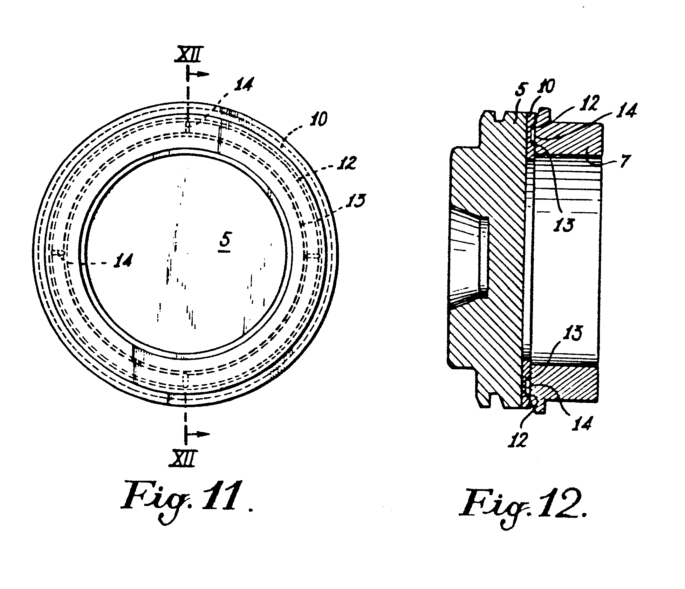

c)    l'opercule 5 a atteint sa position extrême de fin de course (Fig. 11 et 12).

Lorsque l'opercule 5 occupe la position illustrée aux Fig. 7 et 8, l'obturation de la lumière du siège 7 n'est que partielle. Le liquide s'écoule à travers la fente qui subsiste entre le bord de l'opercule 5 et le bord intérieur du siège 7, qui ne sont que partiellement en contact.

Lorsque l'opercule 5 occupe la position illustrée aux Fig. 9 et 10, l'obturation de la lumière du siège 7 est complète, car le bord de l'opercule 5 est entré en contact avec le siège 7 sur toute sa périphérie, sans toutefois que l'opercule n'ait atteint sa position extrême de fin de course. En effet, l'opercule 5 doit encore parcourir une certaine distance avant d'être exactement en face du siège 7 (voir Fig. 11 et 12). Il est évident que dans ces conditions, si la surface d'étanchéité annulaire de l'opercule n'était pas rainurée (vannes à sièges parallèles de construction traditionnelle) l'étanchéité serait atteinte dès que le bord de l'opercule 5 serait entré en contact avec le siège 7 sur toute sa périphérie (voir Fig. 9 et 10), ce qui amènerait une augmentation de la pression dans le corps de la vanne, et donc les problèmes exposés plus haut et que l'invention a pour but de résoudre.

Grâce à la présence des deux rainures 12 et 13 reliées par les canaux 14, la communication entre l'intérieur du corps de vanne et les conduites est prolongée. En effet, la rainure 12 étant en communication avec l'intérieur du corps de vanne et la rainure 13 étant en communication avec la conduite, le liquide peut circuler à travers la surface de contact entre l'opercule 5 et le siège 7 grâce aux canaux 14. La fuite ainsi créée retarde l'établissement d'une surpression dans le corps de vanne, lorsque celle-ci est en train de se fermer.

Quand enfin cette surpression apparaît, il ne reste plus alors à l'opercule 5 que quelques millimètres à parcourir avant d'atteindre sa position extrême de fin de course, c'est-à-dire exactement en face du siège 7; or la présence à l'intérieur du corps de vanne de bulles d'air ou de gaz, donc compressibles, emprisonnées lors de la fermeture de la vanne permet à l'obturateur 2 et donc aux opercules 5 et 6 de parcourir ces quelques millimètres qui les séparent de la position extrême de fermeture.

Les Fig. 11 et 12 illustrent l'opercule 5 dans sa position extrême correspondant à la fermeture de la vanne. L'étanchéité est atteinte car tant la rainure extérieure 12 que la rainure intérieure 13 sont en face de la surface d'étanchéité du siège 7 et ne sont donc plus en communication ni avec l'intérieur du corps de vanne ni avec la conduite.

Il est à remarquer que, si la vanne suivant l'invention est généralement équipée d'opercules 5 et 6 munis tous deux de rainures 12 et 13 concentriques reliées par des canaux 14, l'invention peut également s'appliquer à une vanne dans laquelle seul un opercule (5 ou 6) est muni de rainures 12 et 13 reliées par des canaux 14, l'autre opercule ayant une surface d'étanchéité annulaire plane.

REVENDICATIONS
------------------------------

1.- Vanne à sièges parallèles et libre dilatation, comprenant un obturateur circulaire (2) constitué par deux opercules (5, 6) à surfaces d'étanchéité annulaires, sur lesquels sont rapportées deux garnitures (10, 11) qui constituent les surfaces d'étanchéité annulaires, caractérisée en ce que sur la surface d'étanchéité annulaire d'au moins une des deux garnitures (10, 11) sont usinées au moins deux rainures circulaires (12, 13) concentriquement à cette surface d'étanchéité et reliées entre elles par au moins un canal (14).

2.- Vanne suivant la revendication 1, caractérisée en ce que sur la surface d'étanchéité annulaire de chacune des deux garnitures (10, 11) sont usinées deux rainures circulaires (12, 13) concentriquement à cette surface d'étanchéité.

3.- Vanne suivant l'une quelconque des revendications précédentes, caractérisée en ce que le canal (14) qui relie les deux rainures circulaires (12, 13) est une rainure usinée radialement sur la surface d'étanchéité annulaire de la garniture (10, 11).

4.- Vanne suivant l'une quelconque des revendications précédentes, caractérisée en ce que les deux rainures circulaires (12, 13) sont reliées par plusieurs canaux (14).

*Fig. 1.*

2/4

0172801

Fig. 2

Fig. 3.

Fig. 4

Fig. 5.

Fig. 6.

0172801

*Fig. 7.*

*Fig. 8.*

*Fig. 9.*

*Fig. 10.*

Fig. 11.

Fig. 12.

**Office européen des brevets**

**RAPPORT DE RECHERCHE EUROPEENNE**

**0172801**

Numero de la demande

EP   85 87 0106

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| A | FR-A-2 417 702  (ZIKESCH) | | F 16 K    3/02 <br> F 16 K   39/04 |
| A | FR-A-1 070 382  (MUNZING) | | |
| A | US-A-3 478 771  (JOHNSON) | | |
| A | GB-A-2 113 807  (NELSON) | | |

| DOMAINES TECHNIQUES RECHERCHES (Int. Cl 4) |
|---|
| F 16 K |

Le présent rapport de recherche a été établi pour toutes les revendications

| Lieu de la recherche <br> LA HAYE | Date d achèvement de la recherche <br> 05-11-1985 | Examinateur <br> VERELST P.E.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82